# EUROPEAN PATENT SPECIFICATION

(11) **EP 1 013 782 B1**
(45) Date of publication and mention of the grant of the patent: **29.10.2003**
(21) Application number: 99310421.5
(22) Date of filing: 22.12.1999
(51) Int. Cl.: C22C 29/00, C22C 9/00, C23C 4/10

(54) **Abradable material**
Abschleifbares Material
Materiau abrasable

(30) Priority: 23.12.1998 US 220466
(43) Date of publication of application: 28.06.2000
(73) Proprietor: UNITED TECHNOLOGIES CORPORATION, Hartford, CT 06101 (US)
(72) Inventor: Dalzell, William J., Jupiter, Florida 33458 (US); Davis, Charles G., Jupiter, Florida 33458 (US)
(74) Representative: Hall, Matthew Benjamin

(56) References cited:
- WO-A-95/12004
- US-A- 4 023 252
- US-A- 4 257 735
- CHEMICAL ABSTRACTS, vol. 101, no. 8, 20 August 1984 (1984-08-20) Columbus, Ohio, US; abstract no. 58800, PONOMAREVA, S. V. ET AL: "Structure and properties of copper base sealing material" XP002136008 -& POROSHK. METALL. (MINSK) (1982), 6, 14-16 ,1982, XP000901948
- PATENT ABSTRACTS OF JAPAN vol. 004, no. 178 (C-034), 10 December 1980 (1980-12-10) -& JP 55 119144 A (MITSUBISHI METAL CORP), 12 September 1980 (1980-09-12)
- PATENT ABSTRACTS OF JAPAN vol. 016, no. 223 (M-1253), 25 May 1992 (1992-05-25) -& JP 04 041601 A (MITSUBISHI HEAVY IND LTD), 12 February 1992 (1992-02-12)

## Description

The invention relates to abradable materials particularly, but not exclusively suited for use as part of a labyrinth seal system, especially labyrinth seal systems of the type generally referred to as knife edge seals.

Knife edge seals are widely used in gas turbine engines and other applications. A common form of such seals comprises a plurality of raised portions on a rotating shaft, the raised portions being relatively thin in comparison to their height above the shaft surface. These raised "knife edge" portions interact with an abradable material. In engine operation the knife edges cut grooves in the abradable material thereby providing a sealing effect. In operation, the combination of the raised knife edges and the grooves cut in the abradable material provide a labyrinth type'seal and impede the flow of air or other fluids. Such seals are shown for example in U.S. Patent 4,257,735.

In some gas turbine engine applications there is a need for a knife edge seal abradable material which can operate in the presence of oil and oil vapors at temperatures as high as about 500°C or 600°C. In such applications the interaction between the knife edge and the abradable must be nonsparking to prevent oil vapor ignition. Oil is subject to accelerated degradation and coke formation in the presence of some metals. The abradable material must not cause oil degradation.

The seal material must also have the appropriate hardness and frictional characteristics for proper interaction for the knife edges.

This combination of nonsparking, non-oil degrading and appropriate frictional characteristics has not previously been obtained in an abradable material capable of high temperature operation.

It is therefore an object of the invention to provide an abradable seal material which can be used in the presence of synthetic oils at temperatures as high as about 500°C or 600°C without sparking, without oil degradation and with the appropriate friction and wear characteristics to provide a good sealing for example when abraded by a superalloy knife edge.

According to the present invention, there is provided an abradable material, suited for use at temperatures of up to about 500°C and for rubbing interactions with superalloys, which comprises:
a. a copper solid solution matrix, in an amount, by vol., of 35-50% of the abradable material, with solid solution strengthening additions selected from the group of Ni, Ag, Zr, Mn and Zn, and optionally up to one vol% of a second strengthening phase;
b. a dispersion of non metallic solid lubricant particles in the matrix in an amount by volume of 25-55%;
c. balance porosity and matrix material oxides.

In a preferred embodiment the present invention provides a plasma sprayed material comprising copper alloy matrix containing solid non-metallic particles which have low strength and preferably exhibit some degree of lubricity. In a preferred embodiment the copper alloy matrix comprises an alloy containing about 72 wt percent copper 28 weight percent nickel which is plasma sprayed in combination with about 35 wt percent boron nitride to produce a coating comprising by vol about 40% CuNi, about 35% by vol BN, bal porosity, and oxides of CuNi.

In the preferred embodiment the seal material is a copper based material, preferably a Cu-Ni material, applied by plasma spray process having minimal porosity and containing boron nitride, porosity and oxides of the matrix material.

The copper base material forms a continuous matrix which surrounds the boron nitride particles, the porosity and the matrix oxides. A broad definition of the matrix material is that it is a solid solution copper base material which may contain up to one vol % of a second strengthening phase. The matrix may comprise 20-45% by weight Ni. The preferred composition for the copper material is from 65 to 95 weight percent copper, balance nickel. The art of alloying copper is well developed and it is well known that minor additions may be made to copper for various purposes, in particular small amounts of copper oxide and/or zirconium are known to increase resistance of copper to recrystallization and softening. Solid solution strengthening is possible with additions of Ni, Ag, Zr, Mn and Zn. Alloying must take into account the oil breakdown problem. We have observed oil breakdown when a copper alloy containing aluminum was used as an abradable seal.

Those skilled in the copper alloy art will be aware that the addition of alloying elements generally increases the hardness of the copper. The abradability of the seal material will be affected by the hardness of the copper. Harder copper alloys may produce excessive heating in the knife edge seals during aggressive seal interactions. This can be mitigated in some extent by using a larger volume fractions of the boron nitride phase and/or porosity. The solid lubricant preferably comprises about 35-45% by volume of the abradable material.

This matrix material preferably contains from about 35-50 % copper matrix, 25-55% BN, bal porosity, and oxides of the matrix. Boron nitride, which is used in its hexagonal crystal form, acts in part as if it were porosity, thereby reducing the frictional surface area in contact with the knife edges. It also has a lubricating effect and reduces the friction and heat buildup during interaction. Alternate solid lubricants selected from the group consisting of LiF, NaF, CaF, BaF, WS₂, MoS₂, Teflon®, and graphite may be substituted for the BN, or a portion thereof Oil compatibility must be evaluated when using materials other than Cu-Ni and BN.

Additionally, up to 5% by vol of oxides of the matrix material may be present.

The seal material is intended primarily for use in an application involving proximity to lubricating oil and bearings. The seal is suited for this application since the debris produced by in service abrasion will be relatively soft and non damaging to bearings and other lubricated components.

In prior art knife edge seal systems it is common to apply an abrasive coating to the knife edges 10 assist abrasion. We do not use such an abrasive coating because the abrasive material, if worn away, would be damaging to bearings and other lubricated components.

We have used a thin (1 - 5 microns) hard coating of titanium nitride (TiN) on the knife edges without any detectable abrasive damage. Use of TiN coatings on knife edges is optional.

We have fabricated abradable seal materials using a plasma spray process although we believe that other thermal spray processes such as HVOF and D-Gun processes could be used to produce equivalent seal structures. It is also possible to use powder metallurgy techniques such as compression, extrusion and hot isostatic pressing to form mixtures of copper alloy powder and boron nitride powder into materials which could be used as abradable materials with knife edge seals.

In our work with the plasma spray fabrication of knife edge abradable seal materials according to the present invention we have used a Metco-Sulzer SM F2 plasma spray gun which is a miniature plasma spray gun suited for the deposition of plasma spray coatings in confined areas. We have used this miniature gun to apply plasma spray coatings on the interior of some parts whose inner diameter was about 4 inches (0.1m). We believe however that other types of plasma spray guns could be used by one skilled in the art, with appropriate adaptations of operating parameters, to produce the abradable seal material of this invention.

Abradable material densities of up to about 5.5 gms/cc are possible, but densities in excess of about 4.5 will generally require a very thick durable knife edge and/or an abrasive coating on the knife edge. Densities of less than about 3.5 gms/cc are not durable. We prefer a density of between about 3.7 and 4.5 gms/cc, and most prefer a density range of about 3.9 to 4.4 gms/cc.

We prefer to use a bond coat between the substrate and the abradable material, but such a bond coat is optional in some situations. Several bond coat formulations are commercially available including Ni-Al and Ni-Cr-Al. We have used a Ni-Cr-Al bond coat material (6% Al, 18.5% Cr, bal Ni by wt) successfully.

In our current preferred fabrication technique we inject the copper powder into the body of the torch so that it emerges from the torch nozzle with the plasma plume. We use an external tube to flow the boron nitride material into the plasma flame outside of the torch. The copper powder requires softening and or partial melting to form a dense deposit, and the longer residence time in the plasma permits such softening and/or melting. The BN will not soften or melt, but may sublimate or decompose if heated excessively. Injection of the BN into the plasma outside of the gun reduces heating of the BN. We have also used a powder mixer to produce a mix of copper alloy and boron nitride powders which are then injected into the plasma torch body with satisfactory results.

We believe that a range of size of the copper powder particles should be from about -200 to about +325 US std sieve. We believe that boron nitride powder particle size should be from about -1400 to about + 200 US std sieve, but the commercially available BN is -80 + 200 (80% min) plus -200 + 325 (16% max) plus -325 mesh (10% max) which have been used successfully.

The present invention abradable seal was designed for use in an advanced military turbine engine. Synthetic oils used in high performance applications, including gas turbine engine, are commonly ester based with varying chain lengths to control viscosity. Various additives are used for stabilization and other purposes. The specific engine lubricant is Mobil RM 284 A, a synthetic oil which satisfies the requirements of Mil Spec MIL-L7808K, grade 4.

The present invention may be better understood through consideration of the following example which is meant to be illustrative rather than limiting.

### Example

It was desired to coat the inner surface of a cylindrical seal assembly which was about 10 inches (.25 m) in diameter, and made of a superalloy material.

The surface was degreased and grit blasted to provide a clean roughened surface.

A Metco-Sulzer SM F2 plasma gun was used with an S 341003-03 powder port.

The bond coat material was commercial available NiCr-Al composite powder material consisting of (nominally) 6% Al, 18.5% Cr, bal Ni (by weight) in the form of composite particles comprised of NiCr and aluminum particles in an organic binder, a product of the Sulzer Metco Corporation.

The following parameters were employed for the bond coat:
primary gas: argon at 44 SLPM
secondary gas: hydrogen at .1-15.0 SLPM
current: 250 Amps
gun to work distance: 5 inches (.13m)
powder carrier gas: Argon at 2.8 SLPM
The thickness of the bond coat is relatively unimportant, we prefer to use a thickness of 0.008 - 0.012 in. (0.2-0.3 mm), but variations between about 0.004 and 0.050 in. (0.01 and 0.13 mm) appear feasible
The following parameters were used for the (Cu-Ni) + BN Coating:
primary gas: argon at 60 SLPM
secondary gas: hydrogen at 4.5 SLPM
current: 280 Amps
gun to work distance: 2 inches (51mm)
powder carrier gas: Argon at 2.80 SLPM for BN
   Argon at 3.0 SLPM for Cu-N,
All powders were supplied from a vibrating hopper under positive gas pressure. The CuNi powder had a composition of 62 wt% Cu 38 wt% Ni and a powder size of -200 + 325 US Std sieve. The BN powder particle size was -80 + 325 US Std sieve.

The resultant coating was comprised of(by wt) about 70% CuNi, about 30% BN; and by vol about 40% CuNi, about 30% BN and about 30% porosity.

The thickness of the Cu-Ni + BN coating is determined by the design of the seal application. Thicknesses of from about 0.010 to 0.10 in. (0.25 to 2.5 mm) are typical.

It has been found that a feature of the preferred embodiments of the invention is that the material is nonsparking while interacting with nickel superalloy knife edge seals at surface velocities of as much as 15,000 SF/mm (surface feet per minute) (76.2 ms⁻¹). It is another feature that the abradable seal material does not catalyze or accelerate the breakdown of the synthetic oil employed. Another feature is that its interaction with the nickel superalloy knife edge seals occurs without the generation of sufficient thermal energy to cause adverse effects in the knife edge seal.

## Claims

1. An abradable material, suited for use at temperatures of up to about 500°C and for rubbing interactions with superalloys, which comprises:
a. a copper solid solution matrix, in an amount, by vol., of 35-50% of the abradable material, with solid solution strengthening additions selected from the group of Ni, Ag, Zr, Mn and Zn, and optionally up to one vol% of a second strengthening phase;
b. a dispersion of non metallic solid lubricant particles in the matrix in an amount by volume of 25-55%;
c. balance porosity and matrix material oxides.

2. An abradable material as claimed in claim 1 wherein the matrix contains 20-45% by weight of Ni.

3. An abradable material as claimed in claim 1 or 2 wherein the lubricant comprises 35-45% by vol of the abradable material.

4. An abradable material as claimed in any preceding claim wherein the solid lubricant is selected from the group consisting of BN, LiF, NaF, CaF, BaF, WS₂, PTFE, graphite, and mixtures thereof

5. An abradable material as claimed in claim 4 wherein the solid lubricant material comprises BN.

6. A metallic component, having an abradable coating on at least a portion of its surface, which comprises:
a. a substrate selected from the group consisting of steels, iron base superalloys, nickel base superalloys, cobalt base superalloys, chromium base superalloys, and titanium alloys;
b. an abradable material as claimed in any preceding claim.

7. A metallic component, having an abradable coating on at least a portion of its surface, which comprises:
a. a substrate selected from the group consisting of steels, iron base superalloys, nickel base superalloys, cobalt base superalloys, chromium base superalloys, and titanium alloys.
b. a bond coat on the substrate.
c. an abradable material as claimed in any preceding claim on the bond coat.

8. A metallic component as claimed in claim 6 or 7 wherein the abradable coating has been applied to the substrate by a plasma spray process.

## Patentansprüche

1. Abreibbares Material, das zur Verwendung bei Temperaturen von bis zu etwa 500°C und für Reibungs-Wechselwirkungen mit Superlegierungen geeignet ist, aufweisend:
a. eine Kupfer-Mischkristall-Matrix in einer Volumenmenge von 35 bis 50% des abreibbaren Materials, mit Mischkristallverfestigungs-Zusätzen, die aus der Gruppe von Ni, Ag, Zr, Mn und Zn ausgewählt sind, und gewünschtenfalls bis zu 1 Vol.-% einer zweiten Verfestigungsphase;
b. eine Dispersion nicht-metallischer fester Gleitmittel-Teilchen in der Matrix in einer Volumenmenge von 25 bis 55%;
c. Rest Porosität und Matrixmaterialoxide.

2. Abreibbares Material nach Anspruch 1, bei dem die Matrix 20 bis 45 Gew-% Ni enthält.

3. Abreibbares Material nach Anspruch 1 oder 2, bei dem das Gleitmittel 35 bis 45 Vol.-% des abreibbaren Materials ausmacht.

4. Abreibbares Material nach einem der vorangehenden Ansprüche, bei dem das feste Gleitmittel ausgewählt ist aus der aus BN, LiF, NaF, CaF, BaF, WS₂, PTFE, Graphit und Gemischen davon bestehenden Gruppe.

5. Abreibbares Material nach Anspruch 4, bei dem das feste Gleitmittel-Material BN aufweist.

6. Metallisches Bauteil mit einer abreibbaren Beschichtung auf mindestens einem Teil seiner Oberfläche, das aufweist:
a. ein Substrat, das ausgewählt ist aus der aus Stählen, Superlegierungen auf Eisenbasis, Superlegierungen auf Nickelbasis, Superlegierungen auf Cobaltbasis, Superlegierungen auf Chrombasis und Titanlegierungen bestehenden Gruppe;
b. ein abreibbares Material nach einem der vorangehenden Ansprüche.

7. Metallisches Bauteil mit einer abreibbaren Beschichtung auf mindestens einem Teil seiner Oberfläche, das aufweist:
a. ein Substrat, das ausgewählt ist aus der aus Stählen, Superlegierungen auf Eisenbasis, Superlegierungen auf Nickelbasis, Superlegierungen auf Cobaltbasis, Superlegierungen auf Chrombasis und Titanlegierungen bestehenden Gruppe;
b. eine Bindungsbeschichtung auf dem Substrat;
c. ein abreibbares Material nach einem der vorangehenden Ansprüche auf der Bindungsbeschichtung.

8. Metallisches Bauteil nach Anspruch 6 oder 7, bei dem die abreibbare Beschichtung durch ein Plasmaspritzverfahren auf das Substrat aufgebracht wurde.

## Revendications

1. Matériau abrasable, adapté pour être utilisé à des températures allant jusqu'à environ 500°C et pour des interactions par frottement avec des superalliages, qui comprend :
a. une matrice en solution solide de cuivre, en une quantité, en volume, de 35 à 50 % du matériau abrasable, avec des additions de renforcement de la solution solide choisies dans le groupe de Ni, Ag, Zr, Mn et Zn, et éventuellement jusqu'à 1 % en volume d'une deuxième phase de renforcement ;
b. une dispersion de particules lubrifiantes solides non métalliques dans la matrice en une quantité en volume de 25 à 55 % ;
c. pour le complément, des oxydes de matériaux de matrice et de porosité.

2. Matériau abrasable selon la revendication 1, dans lequel la matrice contient 20 à 45 % en poids de Ni.

3. Matériau abrasable selon la revendication 1 ou 2, dans lequel le lubrifiant représente 35 à 45 % en volume du matériau abrasable.

4. Matériau abrasable selon l'une quelconque des revendications précédentes, dans lequel le lubrifiant solide est choisi dans le groupe constitué par BN, LiF, NaF, CaF, BaF, WS₂, PTFE, le graphite, et leurs mélanges.

5. Matériau abrasable selon la revendication 4, dans lequel le matériau lubrifiant solide comprend du BN.

6. Composant métallique, ayant un revêtement abrasable sur au moins une partie de sa surface, qui comprend :
a. un substrat choisi dans le groupe consistant en les aciers, les superalliages à base de fer, les superalliages à base de nickel, les superalliages à base de cobalt, les superalliages à base de chrome, et les alliages de titane ;
b. un matériau abrasable selon l'une quelconque des revendications précédentes.

7. Composant métallique, ayant un revêtement abrasable sur au moins une partie de sa surfacé, qui comprend :
a. un substrat choisi dans le groupe consistant en les aciers, les superalliages à base de fer, les superalliages à base de nickel, les superalliages à base de cobalt, les superalliages à base de chrome, et les alliages de titane ;
b. une couche de liaison sur le substrat ;
c. un matériau abrasable selon l'une quelconque des revendications précédentes sur la couche de collage.

8. Composant métallique selon la revendication 6 ou 7, dans lequel le revêtement abrasable a été appliqué sur le substrat par un procédé de pulvérisation par plasma.
